# EUROPÄISCHE PATENTSCHRIFT

(11) **EP 1 596 533 B1**
(45) Veröffentlichungstag und Bekanntmachung des Hinweises auf die Patenterteilung: **10.10.2007**
(21) Anmeldenummer: 04011183.3
(22) Anmeldetag: 11.05.2004
(51) Int. Cl.: H04L 12/26

(54) **Protokolltester zur Durchführung und Verfahren zur Implementierung einer Testaufgabe**
Protocol testing device for executing and method for implementing a test task
Dispositif d'essai de protocole pour l'exécution et méthode pour l'implémentation d'une tâche d'essai

(43) Veröffentlichungstag der Anmeldung: 16.11.2005
(73) Patentinhaber: Tektronix International Sales GmbH, 8212 Neuhausen (CH)
(72) Erfinder: Schlüter, Ismail, 13086 Berlin (DE)
(74) Vertreter: Schurack, Eduard F.

(56) Entgegenhaltungen:
- DAWSON S ET AL: "Fault injection experiments on real-time protocols using ORCHESTRA" HIGH-ASSURANCE SYSTEMS ENGINEERING WORKSHOP, 1996. PROCEEDINGS., IEEE NIAGARA ON THE LAKE, ONT., CANADA 21-22 OCT. 1996, LOS ALAMITOS, CA, USA,IEEE COMPUT. SOC, US, 21. Oktober 1996 (1996-10-21), Seiten 142-149, XP010244638 ISBN: 0-8186-7629-9
- DAWSON S ET AL: "Experiments on six commercial TCP implementations using a software fault injection tool" SOFTWARE - PRACTICE AND EXPERIENCE WILEY UK, Bd. 27, Nr. 12, 1. Dezember 1997 (1997-12-01), Seiten 1385-1410, XP002298660 ISSN: 0038-0644
- PRADIPTA DE ET AL: "Virtualwire: a fault injection and analysis tool for network protocols" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003, INTERNATIONAL CONFERENCE ON DISTRIBUTED COMPUTING SYSTEMS, LOS ALAMITOS, CA : IEEE COMP. SOC, US, Bd. CONF. 23, 19. Mai 2003 (2003-05-19), Seiten 214-221, XP010642289 ISBN: 0-7695-1920-2

## Beschreibung

Die vorliegende Erfindung betrifft einen Protokolltester zur Durchführung einer Testaufgabe und ein Verfahren zur Implementierung einer Testaufgabe in einem Protokolltester betreffend eine bestimmte Protokollschicht eines Protokollstacks in einem zu testenden Gerät, wobei der bestimmten Protokollschicht eine übergeordnete Protokollschicht als nächsthöhere Protokollschicht übergeordnet und eine untergeordnete Protokollschicht als nächstniedrigere Schicht untergeordnet ist, und wobei im Protokolltester zwischen der übergeordneten Protokollschicht und der untergeordneten Protokollschicht eine Testschicht in den Protokollstack eingefügt ist.

Das Gebiet der Protokollmesstechnik ist in einem besonderen Maße innovativ. Nach jeder Weiter- und Neuentwicklung von Telekommunikations- und Netzwerkprotokollen stehen die Hersteller und Betreiber von Telekommunikations- und Netzwerkgeräten vor dem Problem der Funktions- und Conformancekontrolle der neuen Anlagen. Aufgrund des Wettbewerbs ist jeder Hersteller bemüht, sein Produkt so früh wie möglich auf den Markt zu bringen. Durch das hohe Tempo dieser Entwicklung werden Hersteller von Protokolltestsystemen in einem besonderen Maße gefordert.

Um die Testzeiten für ihre Anlagen so gut wie möglich zu halten und das Testpersonal mit wenig Protokollwissen zu belasten, setzen Hersteller häufig Protokollemulationen auf den Protokolltestsystemen ein. In der Praxis werden Emulationen eines Protokolls häufig so erstellt, dass die Emulationen jeweils einzelne Protokollschichten nachbilden.

Durch das Verbinden der einzelnen Protokollschichten zu einem emulierenden System können auf diese Art ganze Protokollstacks oder auch ausgewählte Teile eines Protokollstacks nachgebildet werden. Die einzelnen Protokollschichten werden abstrakt betrachtet und leiten so Daten von Schicht zu Schicht weiter. In den Spezifikationen von Protokollen werden hierbei in der Regel sogenannte Primitiven verwendet, um die Kommunikation zwischen den Protokollschichten zu beschreiben. In diesem Zusammenhang wird verwiesen auf das ISO OSI Referenzmodell.

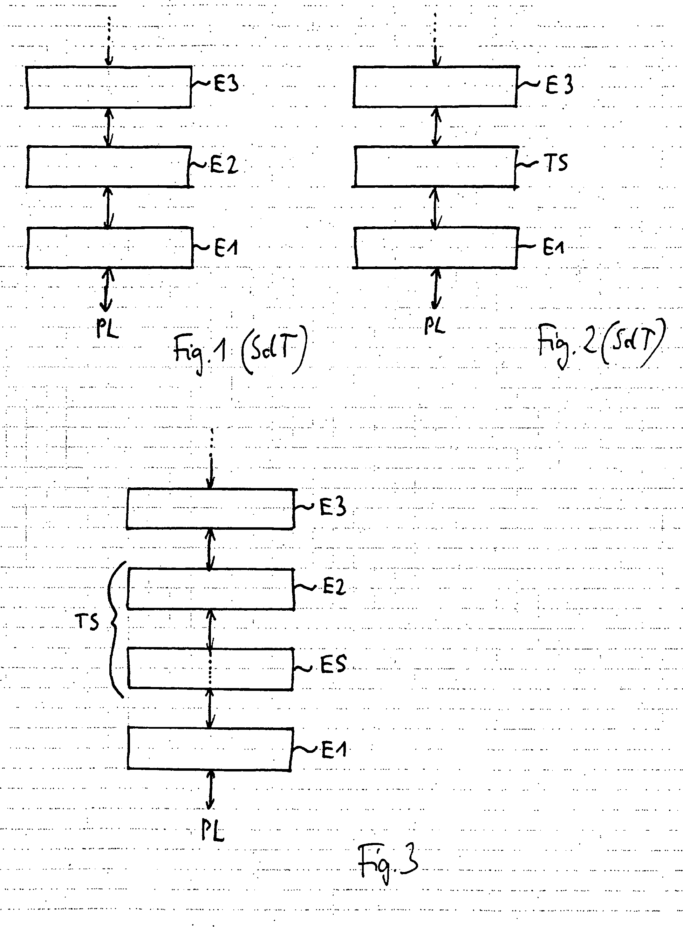

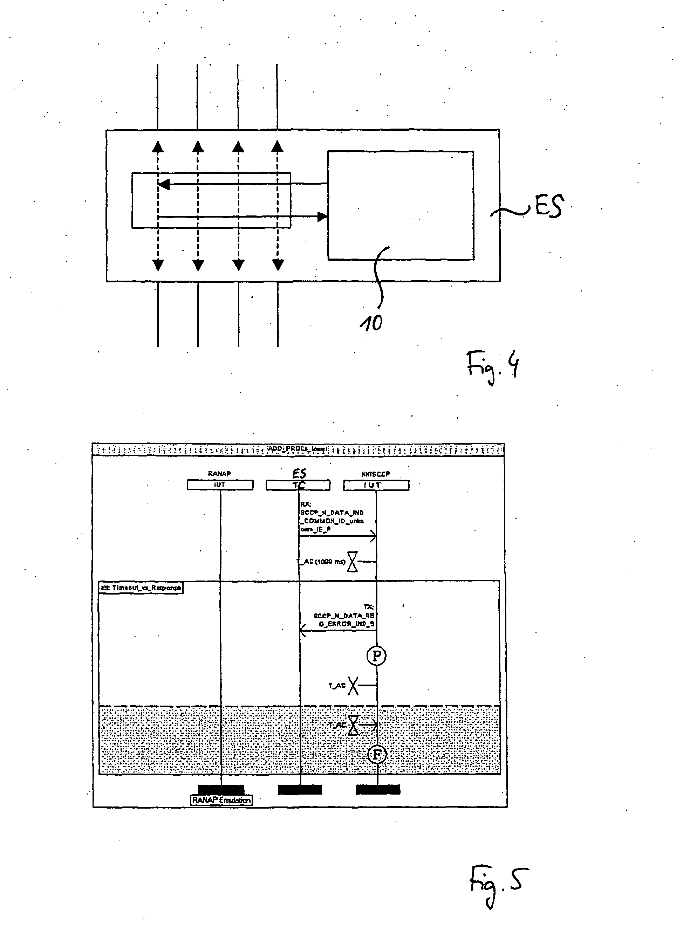

Figur 1 zeigt zur Verdeutlichung den unteren Teil eines Protokollstacks mit Emulationsschichten E1, E2 und E3, wobei die unterste Emulationsschicht E1 mit der physikalischen Schicht, dem Physical Layer PL, verbunden ist. Um nun eine bestimmte Protokollschicht zu testen, wurde im Stand der Technik, siehe Figur 2, die entsprechende Emulationsschicht im Hinblick auf die Testaufgabe neu programmiert. In Figur 2 wurde daher zum Testen der Emulationsschicht E2 die zweite Schicht durch eine Testschicht TS ersetzt. Dies stellt einen erheblichen Programmieraufwand dar, da der gesamte prozedurale Ablauf der entsprechenden Protokollschicht in der Testschicht abgefangen werden muss, was sich in einem entsprechend hohen Implementierungs- und Pflegeaufwand wiederspiegelt. Dieser Programmieraufwand muss wiederholt werden, um beispielsweise eine andere Schicht des Protokollstacks zu testen. Im Stand der Technik muss die Testschicht so programmiert werden, dass sie einerseits die Testaufgabe erfüllt, andererseits alle Funktionalitäten aufweist, die die Emulationsschicht E2 aufweist. Außerdem muss für jede neue Messaufgabe der betreffenden Protokollschicht die Testschicht TS entsprechend umprogrammiert werden.

Bei einer Testschicht TS im Stand der Technik ist demnach die Programmierung der Emulationsschicht und die Programmierung der Messaufgabe nicht deutlich abgegrenzt, die beiden Teile sind vielmehr im Hinblick auf einfache, übersichtliche Programmierung ineinander verschlungen. Eine separate Programmierung der beiden Teile ist im Stand der Technik auch nicht erforderlich, da die Testschicht unabhängig von der Art der Programmierung die entsprechende Emulationsschicht ersetzt. Wesentlich beim Stand der Technik ist, dass die Testschicht die beiden Grundfunktionen, d. h. die Funktionen der Emulationsschicht sowie die Funktionen der Messaufgabe, realisiert.

Zum weiteren Stand der Technik wird wie folgt verwiesen:

Aus der US 20030172342 ist ein System und ein Verfahren bekannt, die die Grenzen des Upper Layer Protokolls (ULP) identifizieren. Sie betrifft jedoch nicht den Nachrichtenfluss und Interaktionen mit anderen Komponenten.

Aus der US 20030086536 ist ein Verfahren bekannt, einen oder mehrere OSSs eines ILEC zu testen. In diesem Zusammenhang werden mehrere Aktionen ausgeführt, die mit der Implementierung eines Testplans zum Testen eines oder mehrerer ILEC OSS Elemente dienen.

Aus der US 20030014611 ist ein Entwicklungswerkzeug bekannt, das die Implementierung von Software für einen DSP unterstützt. Eine ähnliche Offenbarung ist der US 20030004697 zu entnehmen.

In der US 20020191543 werden ebenfalls Parameter in einem Paket von Datenflüssen identifiziert, um zu testen, ob der jeweilige Parameterwert bestimmten Vorgaben entspricht. Die Diskussion ist jedoch begrenzt auf den Bandbreitenaspekt und damit vom Nachrichtenfluss selbst isoliert.

Die US 20020162059 beschäftigt sich mit einem Testsystem für Kommunikationsnetzwerke, die eine autonome oder eine benutzerfreie Interaktion zwischen den administrativen Schnittstellen von verschiedenen zu testenden Netzwerkgeräten ermöglicht. Das Testsystem enthält gerätespezifische Pakete für Kommunikationsschnittstellen, die dazu dienen, allgemeine Befehle in gerätespezifische Befehle umzuwandeln.

Die US 6,661,780 stellt Mechanismen bereit für Abbildungsregeln betreffend den QoS (Quality of Service) in einem mobilen Netzwerk zwischen einer UMTS-Schicht und einer IP-Schicht.

Die US 6,512,988 betrifft ein Testmanagementsystem, mit dem Testfälle bearbeitet werden können, sie beschreibt jedoch keine Implementationsmethoden von Testfällen.

Weiterhin ist aus der US 6,363,053 ein Verfahren zum Testen des QoS eines Netzwerks bekannt. Dabei wird der klassische Ansatz verwendet, bei dem eine Testkomponente ein Knotenelement simuliert bzw. emuliert

In diesem Zusammenhang sei ferner auf den Artikel "Experiments on Six Commerical TCP Implementations Using a Software Fault Injection Tool" von Dawson S. et al. in Software - Practice and Experience, Wiley UK, Band 27, Nr. 12, 1. Dezember 1997, Seiten 1385 bis 1410, verwiesen, in dem ein ORCHESTRA genanntes Werkzeug zum Testen von Kommunikationsprotokollen und zur Fehlerinjektion offenbart wird. Bei ORCHESTRA wird eine Schicht als Sonde bzw. zur Fehlerinjektion (PFI Layer) in einen Protokollstack unterhalb der zu testenden Schicht eingesetzt. Wenn dies möglich ist, wird dabei eine Fehlerinjektionsschicht auf jeder Maschine in einem zu testenden System eingefügt. Hat der Benutzer jedoch nicht zu jedem Protokollstack in dem System Zugang, kann die Fehlerinjektionsschicht auch nur auf einer Maschine eingefügt werden. Insbesondere wird beschrieben, dass ein auf ORCHESTRA basierendes Werkzeug auf der X-Kernel-Plattform eingesetzt wurde, um sechs verschiedene Implementationen des Transmission Control Protocol (TCP) zu testen.

Das ORCHESTRA-Softwarefehlerinjektionswerkzeug wird auch in dem Artikel "Fault Injection Experiments on Real-Time Protocols Using ORCHESTRA" von Dawson S. et al. in High Assurance Systems Engineering Workshop, 1996 Proceedings, IEEE Niagara on the Lake, Ont., Canada, 21. bis 22. Oktober 1996, Los Alamitos, CA, USA, IEEE Comput. Soc., US, 21. Oktober 1996, Seiten 142 bis 149, beschrieben. Insbesondere wird auf eine spezifische Implementation von ORCHESTRA zum Testen von Anwendungen, die UNIX-Sockel zur kommunikation verwenden, eingegangen. Die durch Real-Time Mach zur Verfügung gestellte Unterstützung des Betriebssystems wird genutzt, um das Eindringen des Fehlerinjektionsmechanismus in ein System zu messen und zu kompensieren.

Die Aufgabe der vorliegenden Erfindung besteht darin, einen gattungsgemäßen Protokolltester bzw. das gattungsgemäße Verfahren derart weiterzubilden, so dass sich ein deutlich geringerer Arbeits- und Zeitaufwand für den Programmierer bei der Erstellung eines Testfalls realisieren lässt.

Diese Aufgabe wird gelöst durch einen Protokolltester mit den Merkmalen von Patentanspruch 1 und ein Verfahren mit den Merkmalen von Patentanspruch 8.

Der vorliegenden Erfindung liegt die Erkenntnis zugrunde, dass sich die oben genannte Aufgabe dadurch lösen lässt, dass die Testschicht die Emulation der zu testenden Schicht, die ohnehin vorliegt, umfasst und zur Berücksichtigung der eigentlichen Messaufgabe eine Ergänzungsschicht eingefügt wird. Damit kann der Programmieraufwand auf den eigentlich testrelevanten Teil, d. h. die Testaufgabe reduziert werden. Durch geschickte Programmierung der Ergänzungsschicht sowie durch geeignete Einfügung in den Protokollstack lässt sich damit eine schnelle, einfache und übersichtliche Implementierung einer Testaufgabe realisieren. Während sich im Stand der Technik die Programmierung der Testschicht TS beispielsweise in einem Ausführungsbeispiel auf vier Programmseiten erstreckte, umfasst die Ergänzungsschicht, die beim erfindungsgemäßen Verfahren eingesetzt wird, zur Implementierung derselben Testaufgabe lediglich eine Zeile.

Bevorzugt wird die Ergänzungsschicht zwischen der bestimmten Protokollschicht und der untergeordneten Protokollschicht in den Protokollstack eingefügt. Die untergeordnete Protokollschicht kann hierbei auch der Physical Layer, die physikalische Schicht, sein. Damit wird die Möglichkeit bereitgestellt, Daten im Hinblick auf die Testaufgabe zu scannen, wobei für die Testaufgabe unrelevante Daten transparent weitergeleitet werden. Für unrelevante Daten wirkt deshalb die bestimmte Protokollschicht, d. h. die bereits vorhandene Emulationsschicht. Die Ergänzungsschicht ist demnach ausgebildet, die für die Testaufgabe unrelevanten Daten transparent weiterzuleiten, während für die Testaufgabe relevante Daten, sofern für die Erfüllung der Testaufgabe nötig, modifiziert und/oder erzeugt und/oder getriggert und/oder weiterverarbeitet und/oder ausgewertet werden.

Bevorzugt entsprechen die emulierten Protokollschichten des Protokollstacks, insbesondere die bestimmte Protokollschicht, Standard-Emulationsschichten, die bei einmaliger Programmierung in unterschiedlichsten Funktionen eingesetzt werden können.

Weitere vorteilhafte Ausführungsformen ergeben sich aus den Unteransprüchen.

Im Nachfolgenden wird nunmehr ein Ausführungsbeispiel der Erfindung unter Bezugnahme auf die beigefügten Zeichnungen näher beschrieben. Es stellen dar:
- Figur 1: einen aus dem Stand der Technik bekannten Aufbau eines Protokollstacks durch mehrere Emulationsschichten;
- Figur 2: ein aus dem Stand der Technik bekanntes Verfahren zum Implementieren einer Testaufgabe bei dem Protokollstack von Figur 1;
- Figur 3: eine Ausführungsform eines erfindungsgemäßen Verfahrens zum Implementieren einer Testaufgabe für einen Protokollstack von Figur 1;
- Figur 4: eine schematische Darstellung der Ergänzungsschicht beim erfindungsgemäßen Verfahren im Hinblick auf die durchzuführenden Aktionen; und
- Figur 5: die Implementierung einer Testaufgabe beim erfindungsgemäßen Verfahren unter Verwendung eines Message Sequence Charts.

Figur 3 zeigt die Implementierung einer Testaufgabe bei einem Protokollstack gemäß Figur 1 beim erfindungsgemäßen Verfahren. Demnach wird zwischen der zu testenden Protokollschicht E2, die als Standard-Emulationsschicht ausgebildet ist, und der darunter liegenden Emulationsschicht E1 eine Ergänzungsschicht ES eingefügt, die zusammen mit der Emulationsschicht E2 die Testschicht aus dem Stand der Technik, siehe Figur 2, ersetzt.

Gemäß Figur 4 werden von der Ergänzungsschicht ES die zwischen der Emulationsschicht E1 und E2, insbesondere deren Service Access Points (SAPs), ausgetauschten Primitiven von einer Verarbeitungseinheit 10 gescannt. Dabei werden für die Testaufgabe unrelevante Daten, wie durch die gestrichelten Pfeile gekennzeichnet, transparent weitergeleitet, während für die Testaufgabe relevante Daten, sofern für die Erfüllung der Testaufgabe nötig, modifiziert und/oder erzeugt und/oder getriggert und/oder weiterverarbeitet und/oder ausgewertet werden.

Figur 5 zeigt die Implementierung des erfindungsgemäßen Verfahrens am Beispiel der standardisierten Sprache MSC (Message Sequence Charts), die dazu dient, einen Kommunikationsablauf zwischen zwei oder mehr Instanzen grafisch darzustellen. In diesem Zusammenhang wird verwiesen auf die EP 11 28 600 A1, und die erläutert, wie ein grafisch zwischen zwei oder mehr Instanzen unter Verwendung der standardisierten Sprache MSC dargestellter Kommunikationsablauf in eine ausführbare Version eines Kommunikationsablaufs umgesetzt wird. Details zu MSC können darüber hinaus der ITU-T Z.120 entnommen werden. Eine Vereinfachung der Lösung der in der EP 1 128 600 A1 dargestellten Problematik kann der EP 1 420 545 A1 entnommen werden. Gemäß Figur 5 weist die Kommunikation zwei Instanzen IUT (Item Under Test) auf, wobei die linke (RANAP) beispielhaft die zu testende Schicht, und die rechte (NNISCCP) die Schicht, die unter der zu testenden Schicht angeordnet ist, repräsentieren. Zwischen den beiden Instanzen IUT ist die Instanz TC (Test Component) angeordnet, die die Ergänzungsschicht ES darstellt. Vorliegend soll der Protokolltester einen RNC (Radio Network Controller) testen, der nach Einrichtung einer Verbindung zum Core Network in einem geeigneten Verbindungszustand ist, um die Prozedur "Common ID" zu initiieren, wobei er eine "Common ID"-Nachricht erhalten hat, die ein unbekanntes Informationselement enthält. Dies wird zum Ausdruck gebracht, indem die Ergänzungsschicht ES (die Zeit schreitet voran entlang der senkrechten Linien nach unten) die Nachricht sendet SCCP_N_DATA_IND_COMMON_ID_unknown_IE_R. Anschließend wird ein Timer von einer Sekunde gesetzt (T_AC(1000 ms)). Wenn innerhalb dieser Zeit von der Ergänzungsschicht ES über die untere Schicht die Nachricht "Error Indication" empfangen wird, wonach das unbekannte Informationselement zurückgewiesen wird (TS: SCCP_N_DATA_REQ_ERROR_IND_S) gilt das Verhalten als standardkonform, der Test wurde erfolgreich absolviert (P = Passed). Der Timer wird zurückgesetzt. Sofern, wie aus dem unteren Bereich hervorgeht der Zeichnung hervorgeht, nach Ablauf des Timers keine erwünschte Fehlermeldung der Gegenseite eingegangen ist, gilt der Test als fehlgeschlagen (F = Failed).

Die Standard RANAP-Emulationsschicht hat standardgemäß keine Fehlerbehandlung implementiert, so dass dieser Testfall komplett von der Ergänzungsschicht ES behandelt wird. Der übrige Message Flow bleibt jedoch in der Verantwortung der RANAP Emulationsschicht.

Vorliegend hätte eine Implementierung nach dem Stand der Technik einen Mehraufwand um mindestens den Faktor 10 bedeutet. Generell ist der Mehraufwand abhängig von der Komplexität des Protokollstacks und des zu testenden Protokoll Layers.

Die vorliegende Erfindung kann auch zu anderen Zwecken eingesetzt werden: Wenn beispielsweise ein zu testendes Gerät eine kundenspezifische Ausprägung oder Erweiterung des Standards beinhaltet, würde bei der Durchführung eines Tests im Stand der Technik ein nicht-standardkonformes Ereignis den Test verhindern. Vorliegend können derartige Spezialfälle innerhalb weniger Sekunden berücksichtigt werden. Die Durchführung eines Tests ist danach problemlos möglich.

## Patentansprüche

1. Protokolltester zur Durchführung einer Testaufgabe betreffend eine bestimmte Protokollschicht eines Protokollstacks in einem zu testenden Gerät, wobei der bestimmten Protokollschicht eine übergeordnete Protokollschicht als nächsthöhere Protokollschicht übergeordnet und eine untergeordnete Protokollschicht als nächstniedrigere Schicht untergeordnet ist, und wobei im Protokolltester zwischen der übergeordneten Protokollschicht (E3) und der untergeordneten Protokollschicht (E1, PL) eine Testschicht (TS) in den Protokollstack eingefügt ist,
**dadurch gekennzeichnet,**
**dass** im Protokolltester der Protokollstack mittels Emulationsschichten (E1, E2, E3) nachgebildet ist, und dass die Testschicht (TS) im Protokolltester die emulierte bestimmte Protokollschicht (E2) und eine Ergänzungsschicht (ES) umfasst.

2. Protokolltester nach Anspruch 1,
**dadurch gekennzeichnet,**
**dass** die untergeordnete Protokollschicht der Physical Layer (PL) ist.

3. Protokolltester nach Anspruch 1 oder 2,
**dadurch gekennzeichnet,**
**dass** die Ergänzungsschicht (ES) zwischen der emulierten bestimmten Protokollschicht (E2) und der untergeordneten Protokollschicht (E1, PL) in den Protokollstack eingefügt ist.

4. Protokolltester nach einem der vorhergehenden Ansprüche,
**dadurch gekennzeichnet,**
**dass** die Ergänzungsschicht (ES) Mittel zur Definition der Testaufgabe umfasst.

5. Protokolltester nach einem der vorhergehenden Ansprüche,
**dadurch gekennzeichnet,**
**dass** die Ergänzungsschicht (ES) ausgebildet ist, die zwischen der untergeordneten und der bestimmten Schicht und umgekehrt transportierten Daten im Hinblick auf die Testaufgabe zu scannen, wobei für die Testaufgabe unrelevante Daten transparent weitergeleitet werden.

6. Protokolltester nach Anspruch 5,
**dadurch gekennzeichnet,**
**dass** die Ergänzungsschicht (ES) ausgebildet ist, für die Testaufgabe relevante Daten, sofern für die Erfüllung der Testaufgabe nötig, zu modifizieren und/oder zu erzeugen und/oder zu triggern und/oder weiterzuverarbeiten und/oder auszuwerten.

7. Protokolltester nach einem der vorhergehenden Ansprüche,
**dadurch gekennzeichnet,**
**dass** die emulierten Protokollschichten (E1, E2, E3) des Protokollstacks, insbesondere die bestimmte Protokollschicht (E2), Standard-Emulationsschichten entsprechen.

8. Verfahren zur Implementierung einer Testaufgabe in einem Protokolltester betreffend eine bestimmte Protokollschicht eines Protokollstacks in einem zu testenden Gerät, wobei der bestimmten Protokollschicht eine übergeordnete Protokollschicht als nächsthöhere Protokollschicht übergeordnet und eine untergeordnete Protokollschicht als nächstniedrigere Schicht untergeordnet ist, und wobei im Protokolltester der Protokollstack mittels Emulationsschichten (E1, E2, E3) nachgebildet ist, und zwischen der übergeordneten emulierten Protokollschicht (E3) und der untergeordneten Protokollschicht (E1, PL) eine Testschicht (TS) in den Protokollstack eingefügt ist, wobei die Testschicht (TS) im Protokolltester die emulierte bestimmte Protokollschicht (E2) und eine Ergänzungsschicht (ES) umfasst, und wobei die Testaufgabe in der Ergänzungsschicht (ES) definiert wird.

## Claims

1. Protocol tester for performing a test task relating to a specific protocol layer of a protocol stack in an apparatus to be tested, wherein to said specific protocol layer there is superordinated a higher-level protocol layer as the next higher protocol layer and there is subordinated a lower-level protocol layer as the next lower layer, and wherein in the protocol tester there is inserted, between the higher-level protocol layer (E3) and the lower-level protocol layer (E1, PL), a test layer (TL) into the protocol stack,
**characterised in that**
the protocol stack in the protocol tester is reproduced by means of emulation layers (E1, E2, E3), and
the test layer (TL) in the protocol tester comprises the emulated specific protocol layer (E2) and a complementary layer (CL).

2. Protocol tester according to claim 1,
**characterised in that**
the lower-level protocol layer is the physical layer (PL).

3. Protocol tester according to claim 1 or 2,
**characterised in that**
the complementary layer (CL) is inserted between the emulated specific protocol layer (E2) and the lower-level protocol layer (E1, PL), into the protocol stack.

4. Protocol tester according to one of the preceding claims,
**characterised in that**
the complementary layer (CL) comprises means for defining the test task.

5. Protocol tester according to one of the above claims,
**characterised in that**
the complementary layer (CL) is designed to scan, with respect to the test task, the data transmitted between the lower-level layer and the specific layer and the data transmitted in the reverse direction, wherein data not relevant for the test task are transmitted in a transparent manner.

6. Protocol tester according to claim 5,
**characterised in that**
the complementary layer (CL) is designed to modify and/or generate and/or trigger and/or process further and/or analyse data relevant for the test task, insofar as required for fulfilling the test task.

7. Protocol tester according to one of the preceding claims,
**characterised in that**
the emulated protocol layers (E1, E2, E3) of the protocol stack, in particular the specific protocol layer (E2), correspond to standard emulation layers.

8. Method for implementing a test task in a protocol tester relating to a specific protocol layer of a protocol stack in an apparatus to be tested, wherein to said specific protocol layer there is superordinated a higher-level protocol layer as the next higher protocol layer and there is subordinated a lower-level protocol layer as the next lower layer, and wherein the protocol stack in the protocol tester is reproduced by means of emulation layers (E1, E2, E3), and between the higher-level emulated protocol layer (E3) and the lower-level protocol layer (E1, PL), a test layer (TL) is inserted into the protocol stack, wherein said test layer (TL) in the protocol tester comprises the emulated specific protocol layer (E2) and a complementary layer (CL), and wherein the test task is defined in the complementary layer (CL).

## Revendications

1. Testeur de protocole pour exécuter une tâche de test concernant une couche de protocole précise d'une pile de protocole au sein d'un appareil à tester, la couche de protocole précise d'une couche de protocole de niveau supérieur figurant en tant que couche de protocole de niveau directement supérieur et une couche de protocole de niveau inférieur en tant que couche de protocole de niveau directement inférieur, et une couche de protocole de test (TS) étant insérée dans la pile de protocole dans le testeur de protocole, entre la couche de protocole de niveau supérieur (E3) et la couche de protocole de niveau inférieur (E1, PL),
**caractérisé en ce que**
dans le testeur de protocole, la couche de protocole est reproduite au moyen des couches d'émulation (E1, E2, E3) et que la couche de test (TS) comprend dans le testeur de protocole la couche de protocole précise émulée (E2) et une couche complémentaire (ES).

2. Testeur de protocole selon la revendication 1,
**caractérisé en ce que**
la couche de protocole de niveau inférieur est la couche physique (PL).

3. Testeur de protocole selon la revendication 1 ou 2,
**caractérisé en ce que**
la couche complémentaire (ES) est insérée entre la couche de protocole précise émulée (E2) et la couche de protocole de niveau inférieur (E1, PL) dans la pile de protocole.

4. Testeur de protocole selon l'une quelconque des revendications précédentes,
**caractérisé en ce que**
la couche complémentaire (ES) comprend un moyen de définition de la tâche de test.

5. Testeur de protocole selon l'une quelconque des revendications précédentes,
**caractérisé en ce que**
la couche complémentaire (ES) est constituée de façon à scanner les données transportées entre la couche de niveau inférieur et la couche précise, et l'inverse, sur le plan de la tâche de test, des données non pertinentes pour la tâche de test étant transmises de façon transparente.

6. Testeur de protocole selon la revendication 5,
**caractérisé en ce que**
la couche complémentaire (ES) est constituée pour modifier et/ou générer et/ou déclencher et/ou traiter et/ou exploiter les données pertinentes pour la tâche de test dans la mesure ou cela est nécessaire pour réaliser la tâche de test.

7. Testeur de protocole selon l'une quelconque des revendications précédentes,
**caractérisé en ce que**
les couches de protocole émulées (E1, E2, E3) de la pile de protocole, en particulier la couche de protocole précise (E2), correspondent à des couches d'émulation standard.

8. Procédé d'implémentation d'une tâche de test dans un testeur de protocole concernant une couche de protocole précise d'une pile de protocole au sein d'un appareil à tester, la couche de protocole précise d'une couche de protocole de niveau supérieur figurant en tant que couche de protocole de niveau directement supérieur et une couche de protocole de niveau inférieur en tant que couche de protocole de niveau directement inférieur, et la pile de protocole étant reproduite dans le testeur de protocole au moyen des couches d'émulation (E1, E2, E3) et une couche de test (TS) étant insérée dans la pile de protocole entre la couche de protocole émulée de niveau supérieur (E3) et la couche de protocole de niveau inférieur (E1, PL), la couche de test (TS) dans le testeur de protocole comprenant la couche de protocole précise émulée (E2) et une couche complémentaire (ES) et la tâche de test étant définie dans la couche complémentaire (ES).
